# EUROPEAN PATENT SPECIFICATION

(11) **EP 0 323 240 B1**
(45) Date of publication and mention of the grant of the patent: **18.05.1994**
(21) Application number: 88312375.4
(22) Date of filing: 28.12.1988
(51) Int. Cl.: G09G 1/14

(54) **Character processor provided with dot pattern correcting function**
Zeichenverarbeitungseinheit mit der Funktion zum Korrigieren von Matrix-Zeichenmustern
Processeur de caractères muni de la fonction de correction de la forme des caractères matriciels

(30) Priority: 28.12.1987 JP 335194/87
(43) Date of publication of application: 05.07.1989
(73) Proprietor: SHARP KABUSHIKI KAISHA, Osaka 545 (JP)
(72) Inventor: Saito, Keizo, Souraku-gun, Kyoto (JP); Watanabe, Masanobu, Torimi-cho, Nara-shi, Nara-ken (JP)
(74) Representative: Allen, Oliver John Richard

(56) References cited:
- DE-A- 3 806 223
- GB-A- 2 131 660
- US-A- 4 129 860
- US-A- 4 331 955

## Description

The present invention relates to a character processor such as a word processor, office computer or the like and concerns a character processor provided with a dot pattern correcting function capable of correcting outline contours of thick characters, symbols, graphic forms, and others when they are magnified and sent to an output unit such as a display, printer or the like.

Generally in a word processor, office computer or the like, data, represented as characters, symbols or graphic forms or the like, which is inputted through an input unit, is subjected to editing. Then it is output to a printer as a sequence of dot patterns, or it is output to a CRT display. The characters are frequently magnified before outputting so as to emphasize them. A blanked character, as source which can be inputted in a word processor, can also be magnified. As referred to, herein, a blanked character is a character which is represented by a contour outline only. Normally, the blanked character, even when magnified, has a one dot thickness to delineate it.

Such prior art blanked character generation is disclosed in Japanese Patent Laid-Open No. 219180/1987 titled "Pattern Generator".

However, with dot pattern processing according to the aforementioned prior art, since the thickness of a line of the blanked character is constant (1 dot) at all times regardless of magnification, the line of a magnified blanked character is limited in its ability to be magnified, being either too narrow or too thin. Accordingly, for blanked characters, the disadvantage inherent in the prior art is that it is not possible to emphasize them by the normal process of magnification.

The invention provides a character processor provided with a dot pattern correcting function, comprising a character pattern storage device for storing data of various source character patterns formed by dots, an input means having an input key for inputting character data and an edit key for editing source character patterns through magnification or the like, a reading device for reading one source character pattern from the character pattern storage device upon receipt of character data inputted from the input means including a temporary storage device for temporarily storing the source character pattern read out, and a magnified blanked character generation device for generating a magnified blanked character pattern by performing an exclusive OR between the source character pattern and a character pattern synthesized by fetching the source character pattern from the temporary storage device when instruction for magnification is received from the input means and magnifying it, the blank character pattern being shifted vertically or horizontally, or in both directions. It further comprises a magnified thick character generation device for fetching the source character pattern from the temporary storage device when the instruction for magnification is received from the input means, adding dots according to the magnification on one or two predetermined adjacent sides of the source character pattern, thereby generating a magnified thick character, said device magnifying the character pattern with the same magnification as with the magnified blank character pattern, a pattern shift device for shifting the magnified blanked character pattern a predetermined number of dots to the same side, or sides, as that to which dots are added to the thick character at the time of magnified thick character generation, a synthesis device for synthesizing the magnified blanked character pattern by removing a portion of the magnified thick character surrounded by the outline contour of the shifted magnified blanked character, thereby generating a magnified blanked character with a thick contour, and an output device for outputting the magnified blanked character output from the synthesis means.

The character pattern storage device may comprise a character generator, and the temporary storage device may comprise a buffer.

Another mode of the invention concerns a dot pattern correcting method and comprises the steps of:
(a) reading a source character pattern from a character pattern storage device;
(b) generating a magnified blanked character pattern from the read source character pattern by performing an exclusive OR between the source character pattern and a character pattern synthesized by magnifying the source character patterns read out from the character pattern storage device;
(c) generating a magnified thick character, in parallel with the magnified blank character generation, by adding dots to the read source character pattern on one or two predetermined adjacent sides thereof to provide the same magnification as that of the magnified blank character, then shifting it vertically or horizontally or in both directions;
(d) shifting the magnified blanked character pattern a predetermined number of dots to the same side or sides on which dots are added at the time of magnified thick character generation;
(e) synthesizing the magnified thick character pattern and the shifted magnified blanked character pattern by removing a portion or dots from said magnified thick character surrounded by the outline contour of the shifted magnified blanked character, thereby generating a magnified blanked character pattern with a thick contour.

In the step (d), it is preferable that the magnified blanked character pattern be shifted vertically for 1/2 of the number of dots added according to a vertical magnification factor and also transversely for 1/2 of the number of dots added according to a transverse magnification factor.

Accordingly a magnified character is corrected by having outline contours of the blanked character thickened in relation to the magnification factor, and the previous disadvantage of the contour becoming too narrow or thin with the blanked character being magnified is thereby eliminated. Thus, the character style becomes clear, and a distinct magnified blanked character is obtainable.

Hereinafter an embodiment of the invention is described with reference to the accompanying drawings, in which:-
Fig. 1 is a flowchart representing a dot pattern correction given in one embodiment of the invention.
Fig. 2 is a block diagram representing a construction of a device used in the embodiment.
Fig. 3 is a typical drawing showing contents of a work buffer in the processing of the embodiment.
Fig. 4 is a source pattern of character "A" used for description of the embodiment.
Fig. 5 to Fig. 9 are typical drawings for illustrating a magnified blanked character generation of the embodiment.
Fig. 10 is an explanatory drawing showing a pattern of the magnified blanked character generated according to the embodiment.
Fig. 11 and Fig. 12 are typical drawings for illustrating a magnified thick character generation according to the embodiment.
Fig. 13 is an explanatory drawing showing a pattern of the magnified character generated according to the embodiment.
Fig. 14 is an explanatory drawing showing a pattern of the magnified thick character generated according to the embodiment.
Fig. 15 is a block diagram for illustrating a processing of the embodiment.
Fig. 16 is an explanatory drawing showing a pattern of the magnified blanked character ultimately generated according to the embodiment.

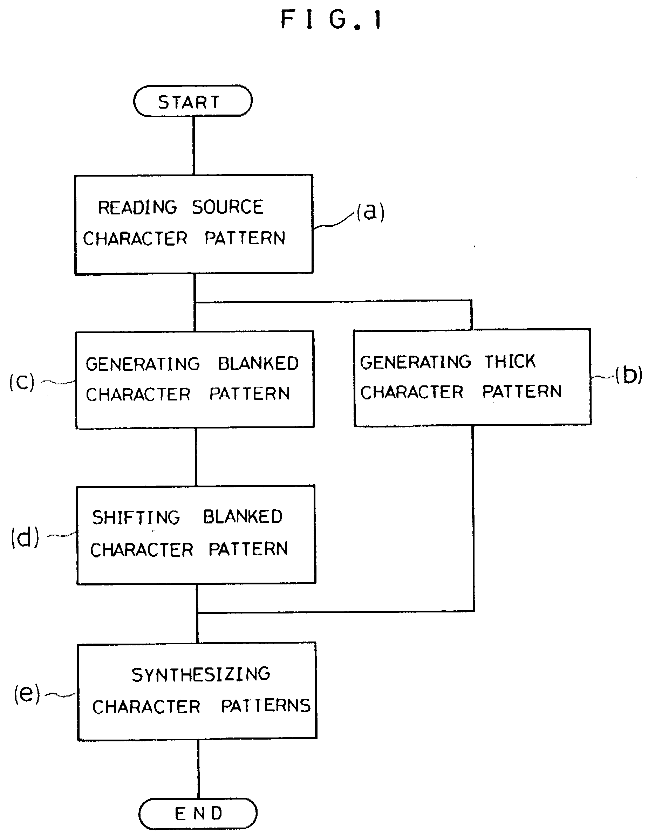

The dot pattern correcting method of the preferred embodiment is illustrated in Figure 1 and combines conventional blanked character generation with conventional thick character generation and effects the further pattern editing to thereby generate a blanked character with thickened outline.

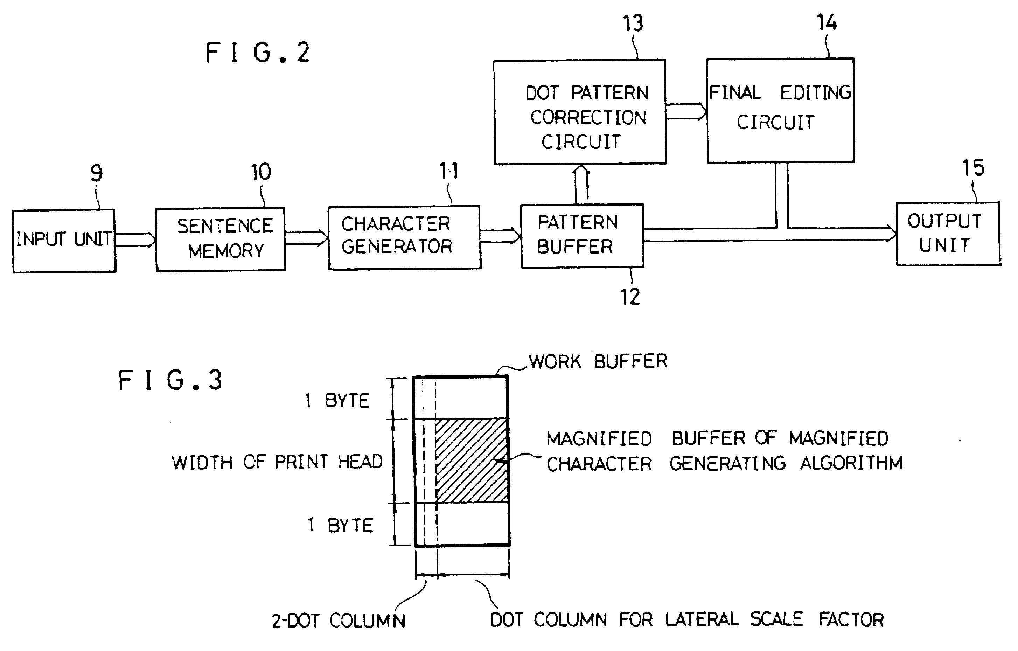

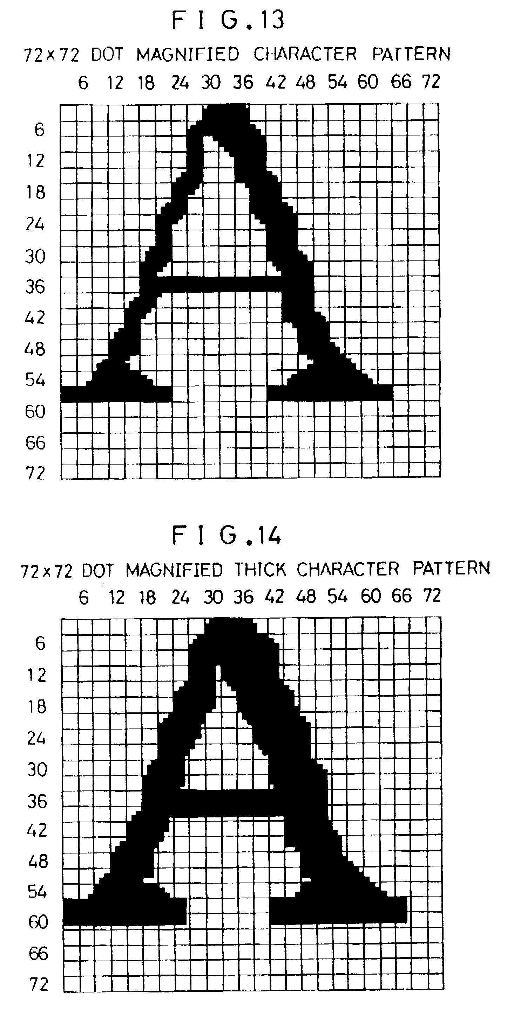

In Fig. 2 block 9 denotes an input unit, which is provided with an input key for inputting character codes and an edit key for editing source character patterns (e.g. by a process of magnification). A block 10 denotes a sentence memory for storing codes indicating character, symbol, graphic forms and the like which are fed successively from the input unit 9. A block 11 denotes a character generator where source dot patterns corresponding to character, symbol, graphic forms and others, have been stored and which converts a character code, for example, fed from the sentence memory 10, into a dot pattern when is then outputted to a pattern buffer 12. The pattern buffer 12 temporarily holds source dot pattern data fed from the character generator 11, and outputs the source dot pattern directly to an output unit 15, such as a printer or the like, when magnification is not required. A block 13 denotes a dot pattern correction circuit, which fetches the character source dot patterns successively from the pattern buffer 12, supplies a predetermined correction, and then outputs the data as various character dot patterns. A block 14 denotes a final editing circuit, which processes each correction pattern fed from the dot pattern correction circuit 13 into the required dot pattern and outputs it to the output unit 15. The blanked character generation as used in the embodiment is described further with reference to Fig. 13 to Fig. 16.

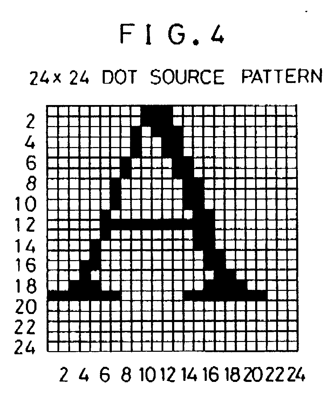

In the processing, a work buffer such as shown in Fig. 3 is used. Fig. 4 represents a source pattern of the character "A" displayed as a dot matrix of 24 x 24 dots.

Here, we describe a basic method for generating the blanked character by leaving only the outline contours of the magnified character. The blanked character generation is attained by repeating each processing of "magnified character expansion" in respect of portions of the character to achieve magnification of the whole character according to a magnified character generation algorithm, carrying out a "blanking" operation for leaving only the outline of the contours of the character, transmitting a generated blanked character pattern to a print buffer, and a "pattern shift" for shifting the patterns within a work buffer.

A blanked character for each line is obtainable through repeating the process above; therefore a specified blanked character is generated by changing the line and repeating in accordance with a vertical scale factor.

Next, the aforementioned each process step will be described in detail.

### (1) Blanking

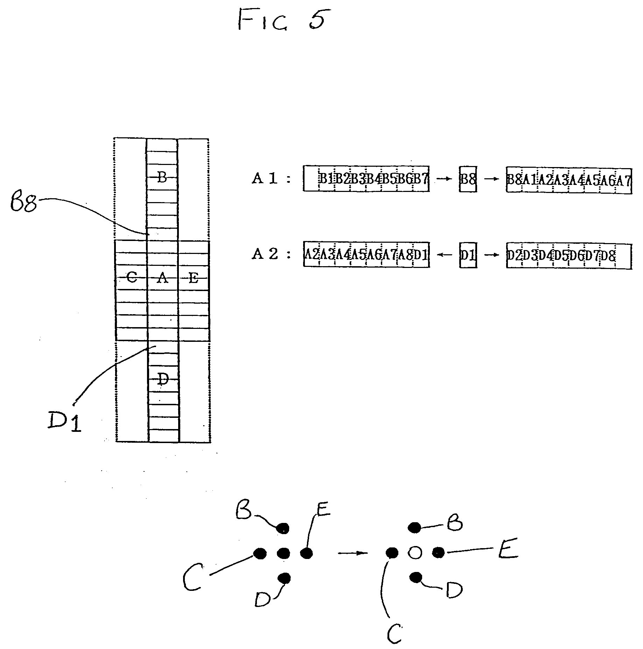

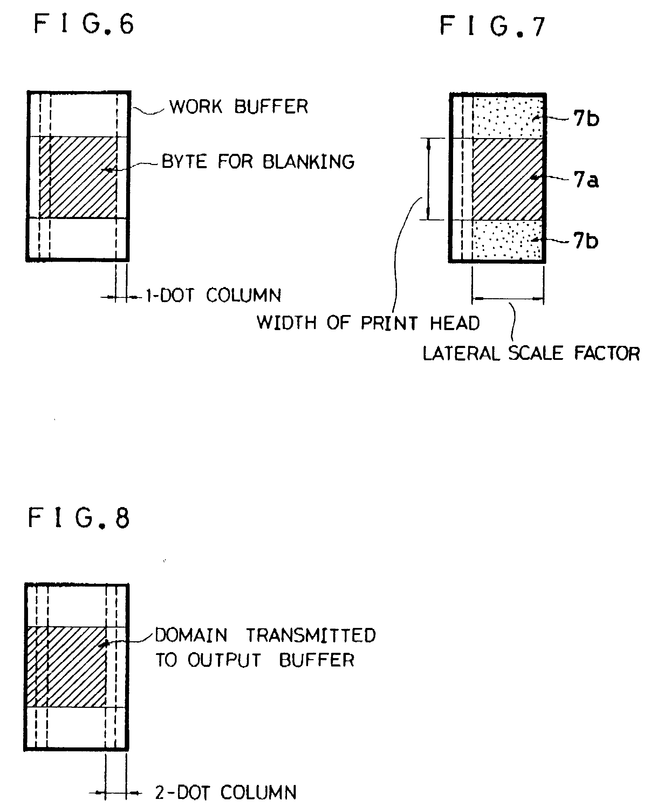

Blanking entails obtaining the contour point in respect of each discrete part of a pattern through the following logical operation by a byte unit, after magnification of the character. Here, information shown in Fig. 5 is sent from the pattern buffer 12. For example, a generation of blanked pattern "X" of a byte "A" will be considered.
- X =: (A AND (NOT C)) OR (A AND (NOT E)) OR (A AND (NOT A1)) OR (A AND (NOT A2))
- A1 =: shifting byte A right by 1 bit accompanied by least significant bit of byte B
- A2 =: shifting byte A left by 1 bit accompanied by most significant bit of byte D
Where in respect of byte A, B and D are the vertically adjacent bytes, C and E are the horizontally adjacent bytes and A1 and A2 are the products of the specified logical operations.
Thus, the contour point is obtained for "A" by referring to the vertically and horizontally adjacent bytes, thereby generating "X". The byte for blanking is that corresponding to an oblique line portion of a character in the work buffer shown in Fig. 6.

As described above, to obtain the contour point a reference is necessary to the vertically and horizontally adjacent bytes. Therefore there is provided one dot column vertically of the respective oblique line portion of the work buffer. The generated contour pattern is loaded one column ahead. In the case of Fig. 5, the contour pattern "X" of "A" is loaded at a position of "C".

### (2) Magnification of a Character

In Fig. 7, a part of the character (print head width x lateral scale factor) is magnified on an oblique line portion of the work buffer according to the magnified character generation algorithm. In the case where merely the magnified character is generated, a portion of the oblique line 7a shown in Fig. 7 may be processed; however, for blanking, the portion 7b must be magnified.

### (3) Transmission to Output Buffer

A blanked character pattern generated through the aforementioned process is transmitted to the output buffer. As described, since the blanked character pattern is generated successively one column ahead, a domain for transmitting to the output buffer is an oblique line portion of the work buffer shown in Fig. 8.

### (4) Shift of Pattern

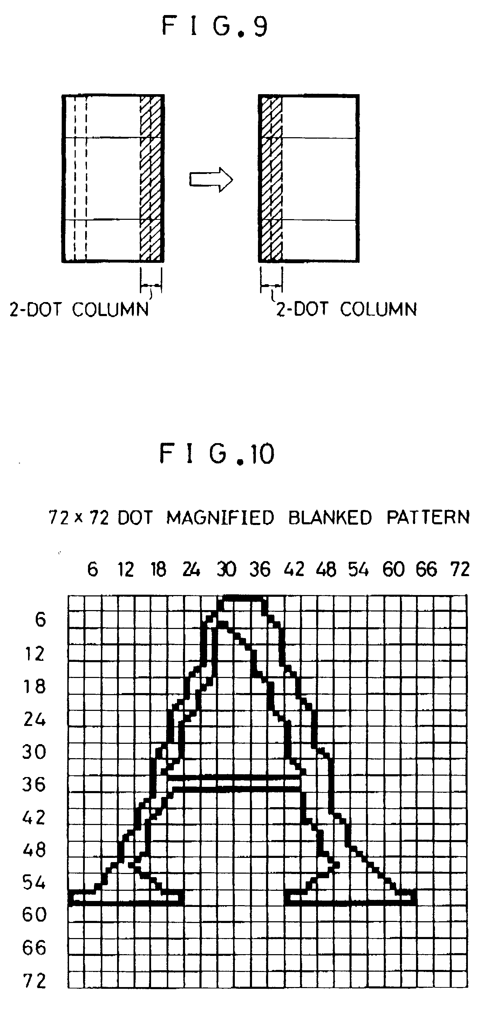

When the character is transmitted to the output buffer, the dot pattern is shifted within the work buffer as shown in Fig. 9 (so as to prepare for the next column processing). The blanked character is generated by repeating the above-described process.

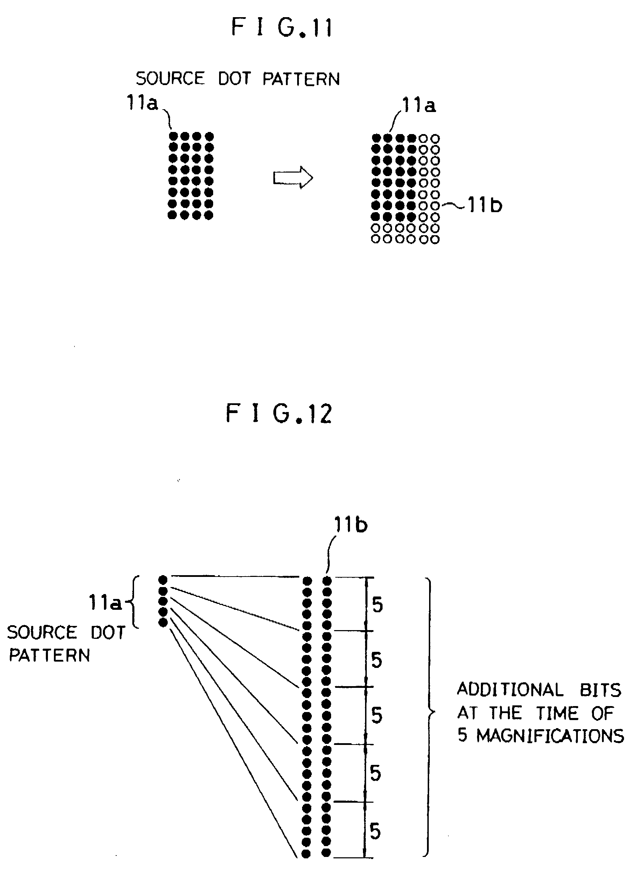

Fig. 10 represents a magnified blanked character generated through the above-described processing, by a factor of 3 magnification.

The prior art processing for generating a thick character will be described next.

A thick character is magnified on the right side, dots 11b being added on the right side and under side of the black dot source pattern 11a as shown in Fig. 11, the dots 11b (each indicated by the mark " ○ " in the drawings" being added in accordance with the magnification factor.

Fig. 12 is an explanatory drawing showing the state of additional bits when the vertical magnification factor is 5 times, wherein ten black dots, in two columns longitudinally, per dot of the source dot pattern are added.

Fig. 13 represents a normally magnified character and

Fig 14 represents a magnified thick character obtained through the above-described process.

The embodiment of the invention comprises, as described above, combining a prior art blanked character generation and thick character generation, and incorporates further processing of a blanked character in the dot pattern correction circuit 13 and in the final editing circuit 14 (which are portions representing features of the embodiment). The pattern buffer 12 temporarily holds dot patterns fed successively from the character generator 11 for one line characters, for example, and outputs them directly to the output unit 15 such as printer, display or the like to print or display in normal case (where magnification is not carried out). However, in the case that a magnified blanked character is displayed, the dot pattern correction circuit 13 is actuated to load therein an applicable dot information from the pattern buffer 12. Then, the loaded dot information is subjected to the prior art blanked character generation and thick character generation, and the blanked character is generated in the final editing circuit 14.

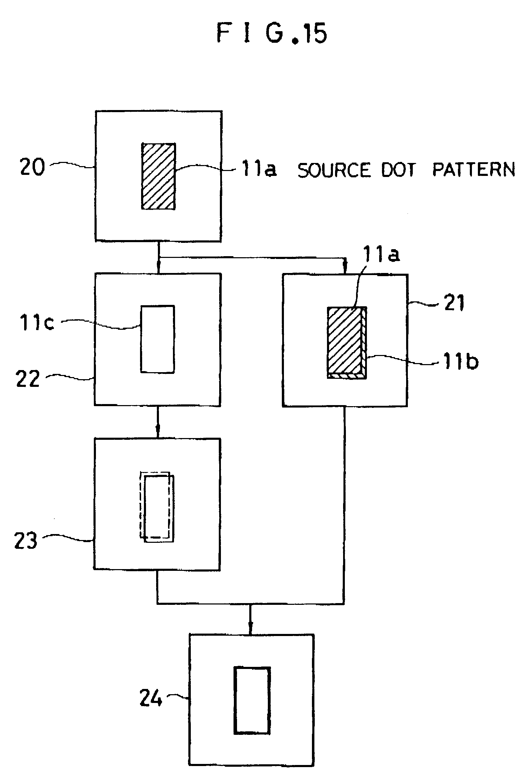

Fig. 15 is a block diagram showing the operation of the preferred embodiment. In the drawing, a block 20 indicates the initial state of the source dot pattern. Here, if generation of a blanked character is indicated, a thick character generation shown in a block 21 is carried out by adding the dot 11b to the source dot pattern 11a, and thereby thick characters are generated. Further, the source dot pattern 11a is subjected to blanking as shown in a block 22 in parallel with the processing of block 21, and a blanked character 11c is generated. Then, the blanked character pattern obtained through blanking is shifted according to a pattern shift shown in a block 23. The shifting is realized by shifting the character by a predetermined number of dots to the same side as the side to which dots are added at the time of thick character generation (shifting from a position indicated by a dotted line to a position indicated by a full line in the block 23). That is, the shifting is made slantingly right and downwards for 1/2 the number of dots than those which are added at the time of thick character generation (longitudinally for 1/2 the number of dots added on a vertical scale factor, and transversely for 1/2 the number of dots added on a transverse scale factor).

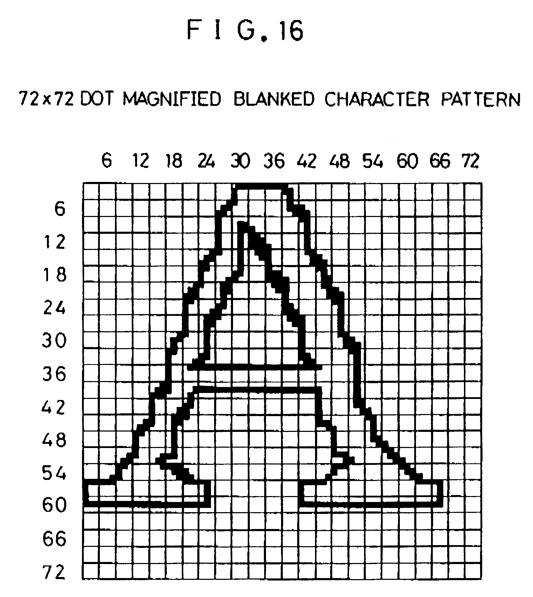

Next, character patterns which are output from the thick character generation (block 21) and the pattern shifting (block 23) are synthesized by superposition shown in a block 24. Then, a magnified blanked character shown in Fig. 16 is obtainable by removing the domain surrounded by a contour of the shifted magnified blanked character pattern from the magnified thick character pattern.

Accordingly, from the dot pattern correcting method of the embodiment, a contour of the blanked character can be thickened according to the magnification factor. Since a character contour will not be thinned by magnifying the blanked character, an emphasis of characters which is the object of character magnification will not be lost.

Whilst the case where the character pattern 24 x 24 dots in one character construction has been described, the character construction is not necessarily limited to 24 x 24 dots, and the embodiment can also be put into practice for other dot construction.

Further, the direction in which a magnified blanked character pattern is shifted is not limited to "slantingly right and downwards" as long as they are the same as the direction in which dots are added at the time of thick character generation.

## Claims

1. A character processor provided with a dot pattern correcting function, comprising a character pattern storage device (11) for storing data of various source character patterns formed by dots, an input means (9) having an input key for inputting character data and an edit key for editing source character patterns through magnification or the like, and a reading device (12) for reading one source character pattern from the character pattern storage device upon receipt of character data inputted from the input means, said reading device including a temporary storage device for temporarily storing the source character pattern read out and a magnified blanked character generation device (22) for generating a magnified blanked character pattern by performing an exclusive OR between the source character pattern and a character pattern synthesized by fetching the source character pattern from the temporary storage device when instruction for magnification is received from the input means and magnifying it, the blank character pattern being shifted vertically or horizontally or in both directions, characterised in that it further comprises
a magnified thick character generation device (21) for fetching the source character pattern from the temporary storage device when the instruction for magnification is received from the input means, adding dots according to the magnification on one or two predetermined adjacent sides of the source character pattern thereby generating a magnified thick character, said device magnifying the character pattern with the same magnification as with the magnified blank character pattern,
a pattern shift device (13) for shifting the magnified blanked character pattern a predetermined number of dots to the same side, or sides, as that to which dots are added to the thick character at the time of magnified thick character generation,
a synthesis device (24) for synthesizing the magnified blanked character pattern by removing a portion of the magnified thick character surrounded by the outline contour of the shifted magnified blanked character, thereby generating a magnified blanked character with a thick contour,
and an output device (15) for outputting the magnified blanked character output from the synthesis device.

2. A character processor according to Claim 1, in which said character pattern storage device (11) comprises a character generator.

3. A character processor according to Claim 1 or Claim 2, in which said temporary storage device (12) comprises a buffer for storing character dot patterns therein.

4. A character processor according to any preceding claim wherein said magnified thick character generation device (21) adds a predetermined number of dots to one predetermined side in a vertical direction and adds a predetermined number of dots to one predetermined side in a horizontal direction.

5. A character processor according to any preceding claim wherein said pattern shift device (13) shifts said magnified character pattern contour outline by 1/2 the number of dots previously added by said magnified thick character generation means, in each of said directions.

6. A dot pattern correcting method in a character processor for reading a source character dot pattern from a pattern storage device, editing by magnification or the like and then outputting to an output unit, comprising:-
(a) reading a source character pattern from a character pattern storage device (11); and
(b) generating a magnified blanked character pattern (11c) from the read source character pattern by performing an exclusive OR between the source character pattern and a character pattern synthesized by magnifying the source character patterns read out from the character pattern storage device, the blank character being shifted vertically or horizontally or in both directions;
characterised in that the method further comprises:
(c) generating a magnified thick character (11a), 11b), in parallel with the magnified blank character generation, by adding dots to the read source character pattern on one or two predetermined adjacent sides thereof to provide the same magnification as that of the magnified blank character,
(d) shifting the magnified blanked character pattern a predetermined number of dots to the same side or sides on which dots are added at the time of magnified thick character generation; and
(e) synthesizing the magnified thick character pattern and the shifted magnified blanked character pattern by removing a portion of dots from said magnified thick character surrounded by the outline contour of the shifted magnified blanked character, thereby generating a magnified blanked character pattern with a thick contour.

7. The dot pattern correcting method according to Claim 6, wherein the step (d) comprises shifting the magnified blanked character pattern vertically by 1/2 the number of dots added according to a vertical magnification factor and also transversely by 1/2 the number of dots added according to a horizontal magnification factor.

## Patentansprüche

1. Zeichenprozessor mit Zeichenmuster-Korrekturfunktion, mit einer Zeichenmuster-Speichervorrichtung (11) zum Abspeichern von Daten verschiedener durch Punkte gebildeter Ausgangszeichenmuster, einer Eingabeeinrichtung (9) mit einer Eingabetaste zum Eingeben von Zeichendaten und einer Editiertaste zum Editieren von Ausgangszeichenmustern durch Vergrößern oder dergleichen, und einer Auslesevorrichtung (12) zum Auslesen eines Ausgangszeichenmusters aus der Zeichenmuster-Speichervorrichtung bei Empfang von über die Eingabeeinrichtung eingegebenen Zeichendaten, wobei die Auslesevorrichtung eine Zwischenspeichervorrichtung zum zeitweiligen Abspeichern des ausgelesenen Ausgangszeichenmusters und eine Erzeugungsvorrichtung (22) für ein vergrößertes Konturzeichen aufweist, um ein vergrößertes Konturzeichenmuster dadurch zu erzeugen, daß eine Exklusiv-ODER-Verknüpfung zwischen dem Ausgangszeichenmuster und einem Zeichenmuster vorgenommen wird, das dadurch synthetisiert wird, daß das Ausgangszeichenmuster aus der Zwischenspeichervorrichtung ausgelesen wird, wenn ein Vergrößerungsbefehl von der Eingabeeinrichtung empfangen wird, und es vergrößert wird, wobei das Konturzeichenmuster vertikal oder horizontal oder in beiden Richtungen verschoben wird, **dadurch gekennzeichnet,** daß er ferner folgendes aufweist,
- eine Erzeugungsvorrichtung (21) für ein vergrößertes, fettes Zeichen, um das Ausgangszeichenmuster aus der Zwischenspeichervorrichtung auszulesen, wenn der Vergrößerungsbefehl von der Eingabeeinrichtung empfangen wird, und zum Hinzufügen von Punkten abhängig von der Vergrößerung an einer oder zwei vorgegebenen, benachbarten Seiten des Ausgangszeichenmusters, um dadurch ein vergrößertes, fettes Zeichen zu erzeugen, wobei diese Vorrichtung das Zeichenmuster mit derselben Vergrößerung vergrößert wie das vergrößerte Konturzeichenmuster;
- eine Musterverschiebevorrichtung (13) zum Verschieben des vergrößerten Konturzeichenmusters um eine vorgegebene Anzahl von Punkten zur selben Seite oder Seiten, auf der bzw. denen Punkte zum fetten Zeichen zum Zeitpunkt der Erzeugung des vergrößerten, fetten Zeichens hinzugefügt wurden;
- eine Synthesevorrichtung (24) zum Synthetisieren eines vergrößerten Konturzeichenmusters durch Entfernen eines Teils des vergrößerten, fetten Zeichens, wie es von der Außenkontur des verschobenen, vergrößerten Konturzeichens umgeben wird, um dadurch ein vergrößertes Konturzeichen mit dicker Umrißlinie zu erzeugen;
- und eine Ausgabevorrichtung (15) zum Ausgeben des von der Synthesevorrichtung ausgegebenen vergrößerten Konturzeichens.

2. Zeichenprozessor nach Anspruch 1, bei dem die Zeichenmuster-Speichervorrichtung (11) einen Zeichengenerator aufweist.

3. Zeichenprozessor nach Anspruch 1 oder Anspruch 2, bei dem die Zwischenspeichervorrichtung (12) einen Puffer zum Abspeichern von Zeichenpunktmustern aufweist.

4. Zeichenprozessor nach einem der vorstehenden Ansprüche, bei dem die Erzeugungsvorrichtung (21) für vergrößerte, fette Zeichen eine vorgegebene Anzahl von Punkten an einer vorgegebenen Seite in vertikaler Richtung und eine vorgegebene Anzahl von Punkten an einer vorgegebenen Seite in horizontaler Richtung hinzufügt.

5. Zeichenprozessor nach einem der vorstehenden Ansprüche, bei dem die Musterverschiebevorrichtung (13) die Konturlinie des vergrößerten Zeichenmusters in jeder der genannten Richtung um 1/2 der Anzahl von Punkten verschiebt, die zuvor von der Erzeugungseinrichtung für vergrößerte, fette Zeichen hinzugefügt wurde.

6. Zeichenmuster-Korrekturverfahren in einem Zeichenprozessor zum Lesen von Ausgangszeichen-Punktmustern aus einer Musterspeichervorrichtung, zum Editieren durch Vergrößern oder dergleichen, und zum anschließenden Ausgeben an eine Ausgabeeinheit, mit:
(a) Lesen eines Ausgangszeichenmusters aus einer Zeichenmuster-Speichervorrichtung (11); und
(b) Erzeugen eines vergrößerten Konturzeichenmusters (11c) aus dem gelesenen Ausgangszeichenmuster durch Ausführen einer Exklusiv-ODER-Verknüpfung zwischen dem Ausgangszeichenmuster und einem Zeichenmuster, das durch Vergrößern des Ausgangszeichenmusters erhalten wurde, wie es aus der Zeichenmuster-Speichervorrichtung ausgelesen wurde, wobei das Konturmuster vertikal oder horizontal in beiden Richtungen verschoben wird;
**dadurch gekennzeichnet**, daß das Verfahren ferner folgendes aufweist:
(c) Erzeugen eines vergrößerten, fetten Zeichens (11a, 11b) parallel zur Erzeugung des vergrößerten Konturmusters durch Hinzufügen von Punkten zum gelesenen Ausgangszeichenmuster auf einer oder zwei vorgegebenen, benachbarten Seiten desselben, um für dieselbe Vergrößerung wie beim vergrößerten Korrekturzeichen zu sorgen;
(d) Verschieben des vergrößerten Konturzeichenmusters um eine vorgegebene Anzahl von Punkten zur selben Seite oder zu denselben Seiten, auf der bzw. auf denen Punkte bei der Erzeugung des vergrößerten, fetten Zeichens hinzugefügt werden; und
(e) Synthetisieren des Musters des vergroßerten, fetten Zeichens und des verschobenen, vergrößerten Konturzeichenmusters durch Entfernen eines Teils der Punkte des vergrößerten, fetten Zeichens, die von der Außenkontur des verschobenen, vergrößerten Konturzeichens umgeben werden, wodurch ein vergrößertes Konturzeichenmuster mit dicker Umrißlinie erzeugt wird.

7. Zeichenmuster-Korrekturverfahren nach Anspruch 6, bei dem der Schritt (d) ein Verschieben des vergrößerten Konturzeichenmusters vertikal um 1/2 der Anzahl von Punkten, die abhängig von einem Vertikalvergrößerungsfaktor hinzugefügt werden, und auch in Querrichtung um 1/2 der Anzahl von Punkten, die abhängig von einem Horizontalvergrößerungsfaktor hinzugefügt wurden, aufweist.

## Revendications

1. Processeur de caractère prévu avec fonction de rectification de configuration de points, comportant un dispositif de mise en mémoire de configuration de caractère (11) pour la mise en mémoire de données provenant de sources diverses de configuration de caractère sous forme de points, un moyen d'entrée (9) ayant une touche d'entrée pour l'entrée de données de caractère et une touche d'édition pour l'édition de configurations de caractère de source par agrandissement ou autre, et un dispositif de lecture (12) pour la lecture d'une configuration de caractère de source à partir du dispositif de mise en mémoire de configuration de caractère suivant réception de données de caractère entrés à partir du moyen d'entrée, ledit dispositif de lecture comportant un dispositif de mise en mémoire provisoire pour la mise en mémoire provisoire de la lecture de configuration de caractère de source et un dispositif générateur de caractère agrandis en blanc (22) pour la génération d'une configuration de caractère agrandis en blanc par l'exécution d'un OU exclusif entre la configuration de caractère de source et une configuration synthétisée de caractère en recherchant la configuration de caractère de source au dispositif de mise en mémoire provisoire et son agrandissement, la configuration en blanc de caractère étant l'objet d'un déplacement vertical ou horizontal ou dans les deux sens, caractérisé en ce qu'il comporte en outre
dispositif générateur de caractère gras agrandi pour rechercher la configuration de caractère de source à partir du dispositif de mise en mémoire provisoire lorsque la consigne d'agrandissement est reçue des moyens d'entrée, ajoutant selon l'agrandissement des points d'un ou de deux côtés adjacents prédéterminés de la configuration de caractère de source assurant ainsi la génération un caractère gras agrandi ledit dispositif agrandissant la configuration de caractère avec le même agrandissement que la configuration de caractère agrandi en blanc,
dispositif de déplacement de configuration (13) pour déplacer la configuration agrandie de caractère en blanc d'un nombre prédéterminé de points du même côté, ou des mêmes côtés, que celui auquel les points sont ajoutés au caractère gras au moment de la génération du caractère gras agrandi,
dispositif de synthèse (24) pour synthétiser la configuration du caractère gras agrandi, en retirant une portion du caractère gras agrandi entouré du contour encadré de caractère en blanc agrandi déplacé, assurant ainsi la génération d'un caractère en blanc agrandi à contour gras,
et un dispositif de sortie (15) pour la sortie de la sortie de caractère agrandi en blanc du dispositif de synthèse.

2. Processeur de caractère selon la revendication 1, dont ledit dispositif de mise en mémoire de configuration de caractère (11) comporte un générateur de caractère.

3. Processeur de caractère selon la revendication 1 ou la revendication 2, dont ledit dispositif de mise en mémoire provisoire comporte un tampon pour la mise en mémoire de configurations de points de caractère.

4. Processeur de caractère selon l'une ou l'autre des revendications précédentes, dont ledit dispositif générateur de caractère gras agrandi (21) ajoute un nombre prédéterminé de points d'un côté prédéterminé en sens vertical et ajoute un nombre prédéterminé de points d'un côté prédéterminé en sens horizontal.

5. Processeur de caractère selon l'une ou l'autre des revendications précédentes, dont ledit dispositif de déplacement de configuration (13) déplace ledit contour encadré de configuration de caractère d'une 1/2 du nombre de points ajoutés auparavant par les moyens générateurs de caractère gras agrandi, en chacun desdits sens.

6. Méthode de rectification de configuration de points en processeur de caractère pour la lecture d'une configuration de point de caractère de source à partir d'un dispositif de mise en mémoire, pour l'édition ou autre puis la sortie vers un module de sortie, comportant:-
(a) la lecture d'une configuration de caractère de source à partir d'un dispositif de mise en mémoire de configuration de caractère (11); et
(b) la génération d'une configuration de caractère agrandie en blanc (11c) depuis la configuration lecture de caractère de source en exécutant un OU exclusif entre la configuration de caractère de source et une configuration de caractère synthétisée par l'agrandissement de la lecture des configurations de caractère de source depuis le dispositif de mise en mémoire de configuration de caractère, le caractère en blanc étant déplacé en sens vertical ou horizontal ou dans les deux sens,
caractérisée en ce que la méthode comporte en outre:
(c) la génération d'un caractère gras agrandi (11a,11b) en parallèle avec la génération de caractère en blanc agrandi, en ajoutant des points à la configuration de lecture caractère de source d'un ou de deux de ses côtés adjacents prédéterminés de façon à assurer le même agrandissement que celui du caractère agrandi en blanc,
(d) le déplacement de la configuration de caractère de source agrandi en blanc du même ou des mêmes côtés auxquels les points sont ajoutés lors de la génération du caractère gras agrandi;
(e) la synthèse de la configuration agrandie de caractère gras et de la configuration déplacée de caractère agrandi en blanc par le retrait d'une portion de points dudit caractère gras agrandi entouré du cadre contour du caractère déplacé en blanc agrandi, assurant ainsi la génération d'une configuration de caractère agrandie en blanc avec un contour gras.

7. La méthode de rectification de configuration de points selon la revendication 6, dont la phase (d) comporte le déplacement vertical de la configuration de caractère agrandi en blanc d'une 1/2 du nombre de points ajoutés selon un facteur d'agrandissement vertical et en sens transversal d'une 1/2 du nombre de points ajoutés selon un facteur d'agrandissement horizontal.
